(19) **Europäisches Patentamt / European Patent Office / Office européen des brevets**

(11) **EP 4 557 629 A1**

(12) **EUROPEAN PATENT APPLICATION**

(43) Date of publication:
**21.05.2025 Bulletin 2025/21**

(21) Application number: **24208972.0**

(22) Date of filing: **25.10.2024**

(51) International Patent Classification (IPC):
**H04B 7/06** (2006.01) **G01S 13/00** (2006.01)

(52) Cooperative Patent Classification (CPC):
**H04B 7/0695; G01S 7/006;** G01S 13/426;
G01S 13/86

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.11.2023 GB 202317691**

(71) Applicant: **Nokia Technologies Oy
02610 Espoo (FI)**

(72) Inventors:
• **REZAIE, Sajad**
  **Aalborg (DK)**
• **BARBU, Oana-Elena**
  **Aalborg (DK)**

(74) Representative: **Nokia EPO representatives
Nokia Technologies Oy
Karakaari 7
02610 Espoo (FI)**

(54) **INTEGRATED SENSING AND COMMUNICATION**

(57)    An apparatus, method and computer program is described comprising: broadcasting a reference signal using a plurality of different resources as part of a beam sweeping algorithm; receiving, from one or more communication nodes of a mobile communication system, details of preferred or optimal resources for communication with the respective communication nodes based on a first objective; receiving, from some or all of one or more objects of the mobile communication system, details of preferred or optimal resources for sensing of the respective objects based on said second objective different to the first objective; and forming one or more communication nodes of a mobile communication system and one or more objects of the mobile communication system into one or more groups, wherein each group comprises one or more of said nodes and one or more of said objects.

Fig. 15

**Description**

**Field**

The present specification related to integrated sensing and communication in mobile communication systems.

**Background**

Integrated sensing and communication (sometimes referred to a joint sensing and communication) is a mechanism by which the same resources can be used for both sensing purposes (e.g. for positioning) and communication purposes (e.g. for data transfer). There remains a need for further developments in this field.

**Summary**

In a first aspect, this specification describes an apparatus comprising: means for broadcasting a reference signal using a plurality of different resources (e.g. of a codebook) as part of a beam sweeping algorithm; means for receiving, from one or more communication nodes of a mobile communication system (e.g. from one, some or all of a plurality of nodes), information regarding preferred (e.g. details of optimal) resources for communication with the respective communication nodes based on a first objective; means for receiving, from one or more objects (e.g. one, some or all of a plurality of objects), such as passive and/or active device(s), of the mobile communication system, information regarding preferred (e.g. details of optimal) resources for sensing of the respective objects based on said second objective different to the first objective; and means for forming one or more communication nodes of a mobile communication system and one or more objects of the mobile communication system into one or more groups (e.g. a first group and a second group), wherein each group comprises one or more of said nodes and one or more of said objects. The apparatus may further comprise means for defining a resource (e.g. a time-frequency resource or a time-frequency-space resource) for each group, wherein each defined resource is used for communications (e.g. one or more of uplink, downlink and sidelink communications) with the one or more nodes of the respective group and for sensing said one or more objects of the respective group.

The one or more objects may include tracking targets, such as one or more user equipments (UEs), one or mode pedestrians, one or more moving targets, etc.

Some example embodiments further comprise means for communicating with the node(s) and sensing said object(s) of a group using the respective resources.

In some example embodiments, the said groupings are based, at least in part, on defined preferred or optimal resources for communication with the respective communication nodes based on the first objective and defined preferred or optimal resources for sensing of each of one or more objects based on the second objective different to the first objective.

The means for defining said resource may be configured to maximise (e.g. make as large or great as possible within the circumstances or within reasonable constraints) one of the first and second objectives of the respective group whilst meeting a requirement based on the other of the first and second objectives of the respective group. For example, data transfer may be maximised whilst meeting threshold sensing requirements. Alternatively, sensing requirements may be maximised whilst meeting threshold data transfer requirements.

The first objective may comprise one or more of: received signal strength and signal-to-interference-plus-noise ratio at the respective node. Other metrics could also be used in addition to, or instead of those mentioned above.

The second objective may comprise one or more of: line-of-sight probability, position estimation error, speed estimation error and dominant path detection probability.

The defined resource for a respective group may, for example, comprise a transmission beam having sufficient width to communicate with all nodes of the respective group. Alternatively, or in addition, the defined resource for a respective node may comprise shaped transmission beams having multiple lobes. Some example embodiments further comprise means for generating said transmission beams based on a multi-beam codebook. In some example embodiments, transmission beams may be generated using an inverse hierarchical algorithm.

The said one or more groups may be formed based on at least one of: shared resources (e.g. where the grouped elements having the same optimum beam); neighbouring resources (e.g. neighbouring beams or beams within a threshold distance); shared mobility profiles (e.g. both pedestrians, both stationary etc.); pre-defined groupings; pre-defined codebooks; and supported codebooks.

The said means may comprise at least one processor; and at least one memory storing instructions that, when executed by the at least one processor, cause the performance of the apparatus.

In a second aspect, this specification describes an apparatus comprising: means for forming one or more communication nodes of a mobile communication system and one or more objects (e.g. passive and/or active device(s)) of the mobile communication system into one or more groups (e.g. a first group and a second group), each group comprising one or more of said nodes and one or more of said objects, wherein said groupings are based, at least in part, on defined preferred or optimal resources for communication with the respective communication nodes based on a first objective and defined preferred or optimal resources for sensing of each of one or more objects based on a second objective different to the first objective; and means for defining a resource (e.g. a time-frequency resource or a time-frequency-space resource) for each group, wherein each defined resource is used for communications (e.g. one or more of uplink, downlink and sidelink communications) with the one or more nodes of the respective group and for sensing said one or more objects of the respective group. The one or more objects may include tracking targets, such as one or more user equipments (UEs), one or mode pedestrians, one or more moving targets, etc.

The means for defining said resource may be configured to maximise (e.g. make as large or great as possible within the circumstances or within reasonable constraints) one of the first and second objectives of the respective group whilst meeting a requirement based on the other of the first and second objectives of the respective group. For example, data transfer may be maximised whilst meeting threshold sensing requirements. Alternatively, sensing requirements may be maximised whilst meeting threshold data transfer requirements.

The first objective may comprise one or more of: received signal strength and signal-to-interference-plus-noise ratio at the respective node. Other metrics could also be used in addition to, or instead of those mentioned above.

The second objective may comprise one or more of: line-of-sight probability, position estimation error, speed estimation error and dominant path detection probability.

Some example embodiments further comprise means for broadcasting a reference signal using a plurality of different resources (e.g. of a codebook) as part of a beam sweeping algorithm.

Some example embodiments further comprise means for receiving details of said preferred or optimal resources based on said first objective from some or all of said one or more communication nodes.

Some example embodiments further comprise means for receiving details of said preferred or optimal resources based on said second objective from some or all of said one or more objects.

The defined resource for a respective group may, for example, comprise a transmission beam having sufficient width to communicate with all nodes of the respective group. Alternatively, or in addition, the defined resource for a respective node may comprise shaped transmission beams having multiple lobes.

Some example embodiments further comprise means for generating said transmission beams based on a multi-beam codebook.

In some example embodiments, transmission beams may be generated using an inverse hierarchical algorithm.

The said one or more groups may be formed based on at least one of: shared resources (e.g. where the grouped elements having the same optimum beam); neighbouring resources (e.g. neighbouring beams or beams within a threshold distance); shared mobility profiles (e.g. both pedestrians, both stationary etc.); pre-defined groupings; pre-defined codebooks; and supported codebooks.

Some example embodiments further comprise means for communicating with the node(s) and sensing said object(s) of a group using the respective resources.

The said means may comprise at least one processor; and at least one memory storing instructions that, when executed by the at least one processor, cause the performance of the apparatus.

In a third aspect, this specification describes a method comprising: broadcasting a reference signal using a plurality of different resources (e.g. of a codebook) as part of a beam sweeping algorithm; receiving, from one or more communication nodes (e.g. one, some or all a plurality of nodes) of a mobile communication system, information regarding preferred (e.g. details of optimal) resources for communication with the respective communication nodes based on a first objective; receiving, from one or more objects (e.g. one, some or all of a plurality of objects), such as passive and/or active device, of the mobile communication system, information regarding preferred (e.g. details of optimal) resources for sensing of the respective objects based on said second objective different to the first objective; and forming one or more communication nodes of a mobile communication system and one or more objects of the mobile communication system into one or more groups (e.g. a first group and a second group), wherein each group comprises one or more of said nodes and one or more of said objects. The method may further comprise defining a resource (e.g. a time-frequency resource or a time-frequency-space resource) for each group, wherein each defined resource is used for communications (e.g. one or more of uplink, downlink and sidelink communications) with the one or more nodes of the respective group and for sensing said one or more objects of the respective group.

The one or more objects may include tracking targets, such as one or more user equipments (UEs), one or mode pedestrians, one or more moving targets, etc.

Some example embodiments further comprise communicating with the node(s) and sensing said object(s) of a group using the respective resources.

The said groupings may be based, at least in part, on defined preferred or optimal resources for communication with the respective communication nodes based on the first objective and defined preferred or optimal resources for sensing of each of one or more objects based on the second objective different to the first objective.

Defining said resource may comprise maximising one of the first and second objectives of the respective group whilst meeting a requirement based on the other of the first and second objectives of the respective group. For example, data transfer may be maximised whilst meeting threshold sensing requirements. Alternatively, sensing requirements may be maximised whilst meeting threshold data transfer requirements.

The first objective may comprise one or more of: received signal strength and signal-to-interference-plus-noise ratio at the respective node. Other metrics could also be used in addition to, or instead of those mentioned above.

The second objective may comprise one or more of: line-of-sight probability, position estimation error, speed estimation error and dominant path detection probability.

The defined resource for a respective group may, for example, comprise a transmission beam having sufficient width to communicate with all nodes of the respective group. Alternatively, or in addition, the defined resource for a respective node may comprise shaped transmission beams having multiple lobes. Some example embodiments further comprise generating said transmission beams based on a multi-beam codebook. In some example embodiments, transmission beams may be generated using an inverse hierarchical algorithm.

The said one or more groups may be formed based on at least one of: shared resources (e.g. where the grouped elements having the same optimum beam); neighbouring resources (e.g. neighbouring beams or beams within a threshold distance); shared mobility profiles (e.g. both pedestrians, both stationary etc.); pre-defined groupings; pre-defined codebooks; and supported codebooks.

In a fourth aspect, this specification describes a method comprising: forming one or more communication nodes (e.g. passive and/or active device(s)) of a mobile communication system and one or more objects of the mobile communication system into one or more groups (e.g. a first group and a second group), each group comprising one or more of said nodes and one or more of said objects, wherein said groupings are based, at least in part, on defined preferred or optimal resources for communication with the respective communication nodes based on a first objective and defined preferred or optimal resources for sensing of each of one or more objects based on a second objective different to the first objective; and defining a resource (e.g. a time-frequency resource or a time-frequency-space resource) for each group, wherein each defined resource is used for communications (e.g. one or more of uplink, downlink and sidelink communications) with the one or more nodes of the respective group and for sensing said one or more objects of the respective group. The one or more objects may include tracking targets, such as one or more user equipments (UEs), one or mode pedestrians, one or more moving targets, etc.

Defining said resource may include maximising one of the first and second objectives of the respective group whilst meeting a requirement based on the other of the first and second objectives of the respective group.

The first objective may comprise one or more of: received signal strength and signal-to-interference-plus-noise ratio at the respective node. Other metrics could also be used in addition to, or instead of those mentioned above.

The second objective may comprise one or more of: line-of-sight probability, position estimation error, speed estimation error and dominant path detection probability.

Some example embodiments further comprise broadcasting a reference signal using a plurality of different resources (e.g. of a codebook) as part of a beam sweeping algorithm.

Some example embodiments further comprise receiving details of said preferred or optimal resources based on said first objective from some or all of said one or more communication nodes.

Some example embodiments further comprise receiving details of said preferred or optimal resources based on said second objective from some or all of said one or more objects.

The defined resource for a respective group may, for example, comprise a transmission beam having sufficient width to communicate with all nodes of the respective group. Alternatively, or in addition, the defined resource for a respective node may comprise shaped transmission beams having multiple lobes.

Some example embodiments further comprise generating said transmission beams based on a multi-beam codebook.

In some example embodiments, transmission beams may be generated using an inverse hierarchical algorithm.

The said one or more groups may be formed based on at least one of: shared resources (e.g. where the grouped elements having the same optimum beam); neighbouring resources (e.g. neighbouring beams or beams within a threshold distance); shared mobility profiles (e.g. both pedestrians, both stationary etc.); pre-defined groupings; pre-defined codebooks; and supported codebooks.

Some example embodiments further comprise communicating with the node(s) and sensing said object(s) of a group using the respective resources.

In a fifth aspect, this specification describes computer-readable instructions which, when executed by a computing apparatus, cause the computing apparatus to perform (at least) any method as described herein (including the methods of the third or fourth aspects described above).

In a sixth aspect, this specification describes a computer-readable medium (such as a non-transitory computer-readable medium) comprising program instructions stored thereon for performing (at least) any method as described herein (including the methods of the third or fourth aspects described above).

In a seventh aspect, this specification describes an apparatus comprising: at least one processor; and at least one memory including computer program code which, when executed by the at least one processor, causes the apparatus to perform (at least) any method as described herein (including the methods of the third or fourth aspects described above).

In an eighth aspect, this specification describes a computer program comprising instructions which, when executed by an apparatus, cause the apparatus to: broadcast a reference signal using a plurality of different resources (e.g. of a codebook) as part of a beam sweeping algorithm; receive, from one or more communication nodes of a mobile communication system, information regarding preferred (e.g. details of optimal) resources for communication with the respective communication nodes based on a first objective; receive, from one or more objects of the mobile communication system, information regarding preferred (e.g. details of optimal) resources for sensing of the respective objects based on said second objective different to the first objective; and form one or more communication nodes of a mobile communication system and one or more objects of the mobile communication system into one or more groups, wherein each group comprises one or more of said nodes and one or more of said objects. The instructions, when executed by the apparatus, may further cause the apparatus to define a resource for each group, wherein each defined resource is used for communications with the one or more nodes of the respective group and for sensing said one or more objects of the respective group.

In a ninth aspect, this specification describes a computer program comprising instructions which, when executed by an apparatus, cause the apparatus to: form one or more communication nodes of a mobile communication system and one or more objects of the mobile communication system into one or more groups, each group comprising one or more of said nodes and one or more of said objects, wherein said groupings are based, at least in part, on defined preferred or optimal resources for communication with the respective communication nodes based on a first objective and defined preferred or optimal resources for sensing of each of one or more objects based on a second objective different to the first objective; and define a resource for each group, wherein each defined resource is used for communications with the one or more nodes of the respective group and for sensing said one or more objects of the respective group.

In a tenth aspect, this specification describes an apparatus comprising: a transmitter (or some other means) for broadcasting a reference signal using a plurality of different resources (e.g. of a codebook) as part of a beam sweeping algorithm; a first receiver (or some other means) for receiving, from one or more communication nodes of a mobile communication system, information regarding preferred (e.g. details of optimal) resources for communication with the respective communication nodes based on a first objective; the first or a second receiver (or some other means) for receiving, from one or more objects (e.g. passive and/or active device(s)) of the mobile communication system, information regarding preferred (e.g. details of optimal) resources for sensing of the respective objects based on said second objective different to the first objective; and a control module (or some other means) for forming one or more communication nodes of a mobile communication system and one or more objects of the mobile communication system into one or more groups (e.g. a first group and a second group), wherein each group comprises one or more of said nodes and one or more of said objects. The apparatus may further comprise a/the control module (or some other means) for defining a resource (e.g. a time-frequency resource or a time-frequency-space resource) for each group, wherein each defined resource is used for communications (e.g. one or more of uplink, downlink and sidelink communications) with the one or more nodes of the respective group and for sensing said one or more objects of the respective group.

In an eleventh aspect, this specification describes an apparatus comprising: a control module (or some other means) for forming one or more communication nodes of a mobile communication system and one or more objects of the mobile communication system into one or more groups, each group comprising one or more of said nodes and one or more of said objects, wherein said groupings are based, at least in part, on defined optimal resources for communication with the respective communication nodes based on a first objective and defined optimal resources for sensing of each of one or more objects based on a second objective different to the first objective; and the control module (or some other means) for defining a resource for each group, wherein each defined resource is used for communications with the one or more nodes of the respective group and for sensing said one or more objects of the respective group.

In an twelfth aspect, this specification describes an apparatus comprising: at least one processor; and at least one memory storing instructions that, when executed by the processor, causes the apparatus to perform: broadcasting a reference signal using a plurality of different resources of a codebook as part of a beam sweeping algorithm; receiving, from some or all of one or more communication nodes of a mobile communication system, details of optimal resources for communication with the respective communication nodes based on a first objective; receiving, from some or all of one or more objects (e.g. passive and/or active device(s)) of the mobile communication system, details of optimal resources for sensing of the respective objects based on said second objective different to the first objective; and forming one or more communication nodes of a mobile communication system and one or more objects of the mobile communication system into one or more groups (e.g. a first group and a second group), wherein each group comprises one or more of said nodes and one or more of said objects. The apparatus may be further caused to perform: defining a resource (e.g. a time-frequency resource or a time-frequency-space resource) for each group, wherein each defined resource is used for communications (e.g. one or more of uplink, downlink and sidelink communications) with the one or more nodes of the respective group and for sensing said one or more objects of the respective group.

In a thirteenth aspect, this specification describes an apparatus comprising: at least one processor; and at least one memory storing instructions that, when executed by the processor, causes the apparatus to perform: forming one or more communication nodes of a mobile communication system and one or more objects of the mobile communication system into one or more groups, each group comprising one or more of said nodes and one or more of said objects, wherein said groupings are based, at least in part, on defined optimal resources for communication with the respective communication nodes based on a first objective and defined optimal resources for sensing of each of one or more objects based on a second objective different to the first objective; and defining a resource for each group, wherein each defined resource is used for communications with the one or more nodes of the respective group and for sensing said one or more objects of the respective group.

## Brief description of the drawings

Example embodiments will now be described, by way of example only, with reference to the following schematic drawings, in which:

FIGS. 1 to 3 are block diagrams of systems in accordance with example embodiments;
FIG. 4 is a flow chart showing an algorithm in accordance with an example embodiment;
FIG. 5 is a block diagram of a system in accordance with an example embodiment;
FIG. 6 is a flow chart showing an algorithm in accordance with an example embodiment;
FIG. 7 is a block diagram of a system in accordance with an example embodiment;
FIG. 8 is a block diagram of a system in accordance with an example embodiment;
FIG. 9 is a flow chart showing an algorithm in accordance with an example embodiment;
FIG. 10 shows a table showing features of an example embodiment;
FIGS. 11 to 13 are flow charts showing algorithms in accordance with example embodiments;
FIG. 14 is a plot showing composite beams in accordance with an example embodiment;
FIG. 15 shows a message sequence in accordance with an example embodiment;
FIG. 16 is a block diagram of components of a system in accordance with an example embodiment; and
FIG. 17 shows an example of tangible media for storing computer-readable code which when run by a computer may perform methods according to example embodiments described above.

## Detailed description

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.
In the description and drawings, like reference numerals refer to like elements throughout.

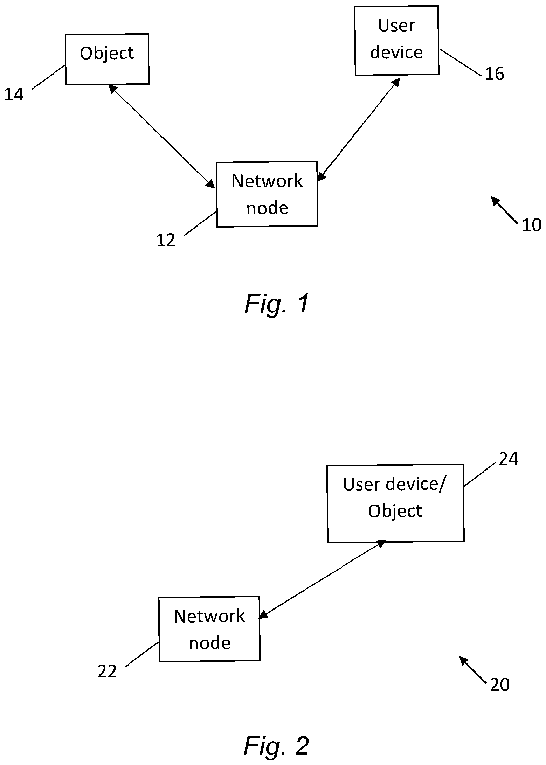

FIG. 1 is a block diagram of a system, indicated generally by the reference numeral 10, in accordance with an example embodiment. The system 10 comprises a network node 12 (such as a base station or a gNB), an object 14, and a user device 16 (e.g. a user equipment, UE). As discussed further below, the network node 12 may transmit sensing signals to the object 14 and receive responses to those signals that can be processed (e.g. for sensing purposes). Similarly, the network node 12 may transmit positioning signals to the user device 16 and receive responses to those signals (e.g. for positioning purposes or for data transfer).
Wireless sensing technologies aim to acquire information about a remote object (such as the object 14) and its characteristics without physically contacting that object. The perception data of the object and its surroundings can be utilized for analysis, so that meaningful information about the object and its characteristics can be obtained. By way of example, radar (radio detection and ranging) is a widely used wireless sensing technology that uses radio waves to determine information such as one or more of: the distance (range), angle, and instantaneous linear velocity of objects.
In the context of a mobile communication system (such as 3GPP 5G systems, 5G-Advanced and next generation 6G systems), sensing capabilities may be provided by the same wireless communication system and infrastructure as used for communication, and the sensing information may be derived from RF-based and/or non-RF based sensors. In general, joint sensing and communication algorithms may involve scenarios of communication-assisted sensing (e.g. where a 5G communication system provides sensing services) or sensing-assisted communication (e.g. where sensing information related to the communication channel or environment is used to improve the communication service of the 5G system itself). By way of example, sensing information may be used to assist or enhance radio resource management, interference mitigation, beam management, mobility, positioning, etc.
FIG. 2 is a block diagram of a system, indicated generally by the reference numeral 20, in accordance with an example embodiment. The system 20 comprises a network node 22 (such as a gNB) and a user device or object 24. The user device/object 24 may be a user equipment (UE) of a 3GPP system.
The network node 22 implements Integrated (or Joint) Communications and Sensing (ICAS/JCAS), for example by reusing New Radio (NR) signals to perform downlink (DL) network sensing. Positioning reference signals (PRS) are good candidates for NR ICAS applications. The relevance of PRS in "monostatic radar" cases includes a relatively large allocated bandwidth and/or better range estimation compared with some other downlink reference signals which are known to the gNB. Furthermore, PRS can be transmitted towards up to 64 different directions to cover both azimuth and elevation spans, which may compensate for the limited number of beam directions with PDSCH as the reference signal.

Integrated Sensing and Communication (ISAC), where the sensing and communication typically share the same frequency band and hardware, is intended as a technology component in wireless systems of 5G-Advanced. As wireless communication technologies such as massive MIMO evolve with more antenna elements and wider bandwidth in higher frequency bands e.g., mm-wave bands, they become reliant on increasingly more specific and accurate assistance information, such as distance (range), angle, instantaneous velocity, and area of objects. Meanwhile, wireless sensing technologies aim at acquiring information about a remote object without physical contact, as discussed above. The sensing data of the object and its surroundings can then be utilized for analysis so that meaningful information about the object and its characteristics can be obtained with high resolution and reliable accuracy.

There are multiple market segments and verticals where 5G-Advanced-based sensing services can be used; these might include intelligent transportation, aviation, enterprise, smart cities, smart homes, smart factories, consumer applications etc. Meanwhile, sensing wireless systems that rely on the same 5G NR wireless communication system and infrastructure offers the sensing information, which can be utilized to assist the wireless communication functionalities, such as radio resource management, interference mitigation, beam management, mobility, etc. A higher efficiency for both sensing services and sensing assisted communications may be enabled when the wireless sensing and communication are integrated in the same wireless channel or environment.

Moreover, a benefit of ICAS is its inherent non-invasiveness. For example, RF waves may be used to track a target without compromising the privacy of the target.

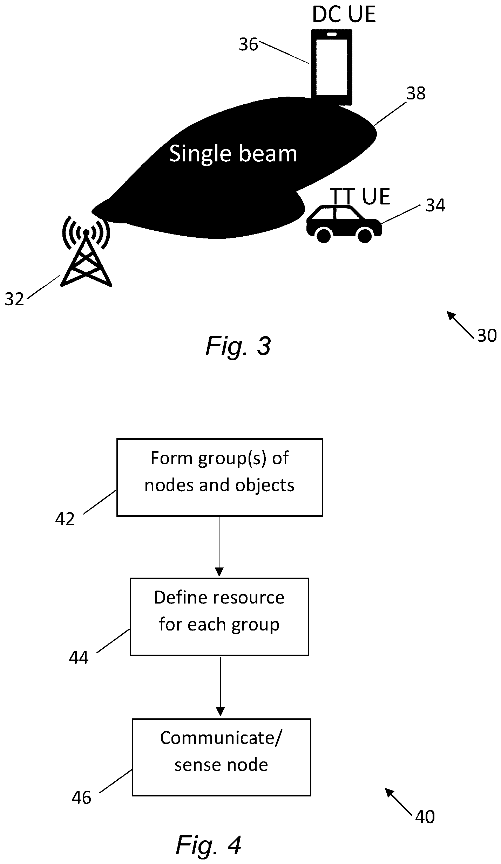

FIG. 3 is a block diagram of a system, indicated generally by the reference numeral 30, in accordance with an example embodiment.

The system 30 comprises a network node 32 (such as a base station or a gNB) that is similar to the network nodes 12 and 22 described above. The system 30 further comprises an object 34 (e.g. a passive device or an active device) and a user device 36 that may be similar to the object 14 and the user device 16 of the system 10 described above. As discussed in detail below, the network node 32 transmits a beam 38 that can be used for sensing in relation to the object 34 and communication with the user device 36.

Defining the beam 38 is not trivial for at least the following reasons.

Since the object 34 and the user device 36 are distinct entities, and thus not generally collocated, and even potentially have different mobility regimes, the propagation conditions from the network node 32 to the object and the user device respectively are different (e.g. having different coherence time and bandwidth). Thus, it may not always be possible to provide a common resource (e.g. time-frequency-space resource) for such propagation conditions and mobility regimes.

Moreover, successful data transfer (between the node 32 and the user device 36) and successful sensing and tracking (of the object 34) may have conflicting goals. For example, a metric that might relevant to improving data transfer between the node 32 and the user device 36 (such as maximising Reference Signal Received Power, RSRP) may be of less relevance to sensing (where, for example, avoiding multi-path conditions may be more relevant).

FIG. 4 is a flow chart showing an algorithm, indicated generally by the reference numeral 40, in accordance with an example embodiment.

The algorithm 40 starts at operation 42, where one or more communication nodes (e.g. data consumers, such as the user device 36 described above) of a mobile communication system and one or more objects (e.g. tracking targets, such as UEs, pedestrians, moving objects etc., such as the object 34) of the mobile communication system are formed into one or more groups. Each group includes one or more of said communication nodes and one or more of said objects. As noted above the one or more objects may include passive devices and/or active devices.

As discussed in detail below, the groupings are based, at least in part, on defined optimal resources for communication with the respective communication nodes based on a first objective and defined optimal resources for sensing of each of one or more objects based on a second objective different to the first objective. The first objective may comprise received signal strength (e.g. RSRP) at the respective node. Alternatively, or in addition, the first objective may comprise and signal-to-interference-plus-noise ratio (SINR) or some other SNR measure at the respective node. The second objective may comprise one or more of: line-of-sight (LOS) probability, position estimation error, speed estimation error and dominant path detection probability.

At operation 44, a resource is defined for each group. The said resource may, for example, be time-frequency resources or time-frequency-space (TFS) resources. Each defined resource can be used for communications (e.g. uplink, downlink or sidelink communications) with the one or more nodes of the respective group and for sensing said one or more objects of the respective group. The beam 38 of the system 30 is an example of a resource that might be defined in the operation 44.

The resources defined in the operation 44 may then be used, as indicated schematically in the operation 46 of the algorithm 40.

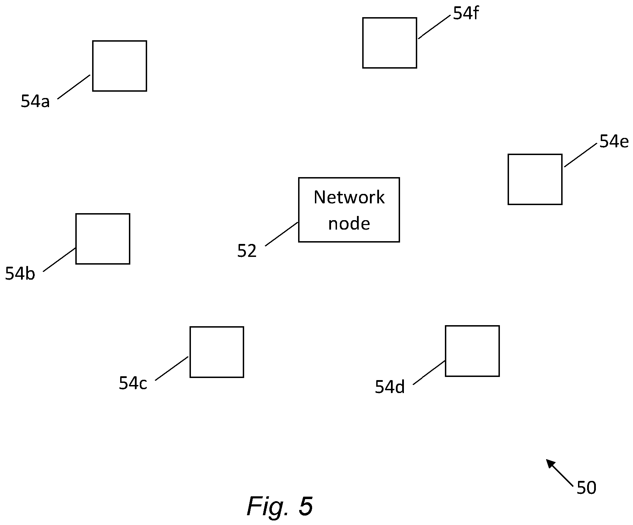

FIG. 5 is a block diagram of a system, indicated generally by the reference numeral 50, in accordance with an example embodiment. The system 50 may make use of the algorithm 40 described above.

The system 50 comprises a network node 52 (which may be similar to the network nodes 12, 22 and 32 described above) and a plurality of elements 54a to 54f. Each of the element 54a to 54f may be a user device or an object (and may therefore be an example of the user device 34 or object 36 of the system 30 described above).

Some or all of the elements 54 to 54f may be formed into groups (in an implementation of the operation 42 described above). Resources may be defined for the respective groups (in an implementation of the operation 44 described above). As discussed in detail below, the operation 44 of the algorithm 40 may define said resources by maximising one of the first and second objectives of the respective group whilst meeting a requirement based on the other of the first and second objectives of the respective group.

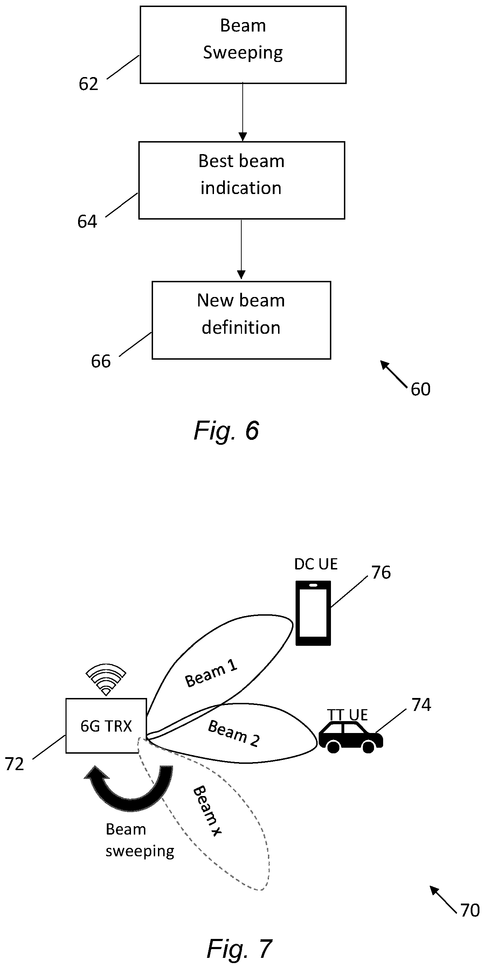

FIG. 6 is a flow chart showing an algorithm, indicated generally by the reference numeral 60, in accordance with an example embodiment. The algorithm 60 may be used to define a beam for a group of communication nodes and objects, thereby providing an example implementation of the operation 44 of the algorithm 40 described above. The algorithm 60 may be implemented at a network node (such as the network node 52), but this is not essential to all example embodiments (some or all of the steps of the algorithm 60 may be implemented elsewhere, such as at a remote server).

The algorithm 60 starts at operation 62, where a reference signal is broadcast using a plurality of different resources of a codebook as part of a beam sweeping algorithm.

At operation 64, indications of "best beams" of the plurality of beams broadcast during beam sweeping are received. For communication nodes, the best beam may be defined based on a first objective (e.g. maximising RSRP or some similar metric). In the context of objects, the best beam may be defined based on a second objective (e.g. line-of-sight probability or some similar metric).

Finally, at operation 66, one or more new beams are defined for an application of ICAS based on the best beam indications obtained in the operation 64.

FIG. 7 is a block diagram of a system, indicated generally by the reference numeral 70, in accordance with an example embodiment. The system 70 may be used in an example implementation of the algorithm 60.

The system 70 comprises a transceiver (a 6G transceiver 72 is shown by way of example), an object (a tracking target (TT) UE 74 is shown by way of example) and a communication node (a Data Consumer UE 76 is shown by way of example).

The 6G transceiver 72 broadcasts a reference signal over different beams in its codebook, thereby implementing operation 62 of the algorithm 60.

The Tracking Target (TT) UE 74 select the optimal 6G TRX beam based on one or more relevant objective(s) (e.g. pointing towards the direction that maximizes LOS probability). Similarly, the Data Consumer (DC) UE 76 select the optimal 6G TRX beam based on one or more relevant objective(s) (e.g. highest signal strength). In cases where the DC UE can implement beamforming on its side, the DC UE may apply suitable beamforming.

The DC and TT UEs feedback their selected 6G TRX beam index to the 6G transceiver 72, thereby implementing operation 64 of the algorithm 60.

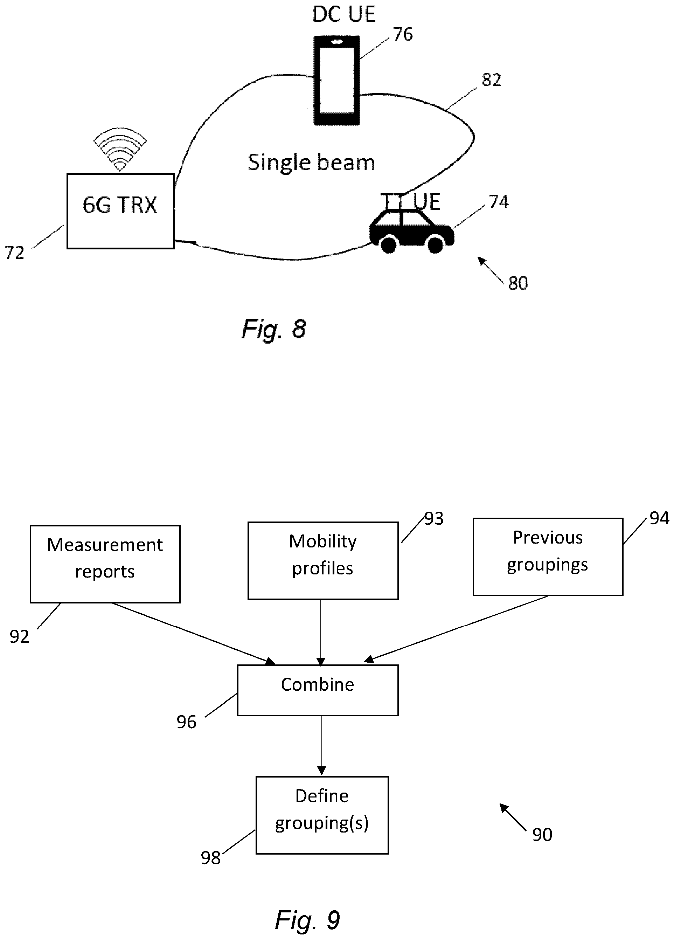

FIG. 8 is a block diagram of a system, indicated generally by the reference numeral 80, in accordance with an example embodiment. The system 80 includes the 6G transceiver 72, the tracking target (TT) UE 74 and the Data Consumer UE 76 described above.

The 6G transceiver 72 associates an object to at least one communication node to maximize the usage of communication signals towards the communication nodes in serving the objects (thereby implementing the operation 42 of the algorithm 40 described above). In the system 80, the association algorithm results in the tracking target (TT) UE 74 and the Data Consumer UE 76 being grouped together.

Moreover, the 6G transceiver 72 defines a JCAS composite Tx beam 82 for TT UE 74 and DC UE 76 that form group (typically one of a number of groups), thereby implementing the operation 66 of the algorithm 60. The composite beam can be used for communications between the transceiver 72 and the DC UE 76, while the TT UE 74 benefits from the communication signals for tracking purposes.

Further details of example implementations of the principles described above are provided below.

Consider a scenario in which a transceiver (e.g. the 6G transceiver 72 described above) with R receive antennas must select a JCAS RX beam that serves a communication node and enables tracking of an object as well. Assume for simplicity that the communication node sends a signal of duration T s(t), $t \in [0, T)$ to the transceiver. The signal s(t) travels over the multipath channel h(t) to the 6G transceiver defined by:

$$h(t) = h_{DC,0}\delta\left(t - \tau_{DC,0}\right) + \sum_{l=1}^{L} h_{DC,l}\delta\left(t - \tau_{DC,l}\right) + h_{TT,0}\delta\left(t - \tau_{TT,0}\right) + \sum_{l=1}^{V} h_{TT,l}\delta\left(t - \tau_{TT,l}\right) \quad (1)$$

consisting of:

- A dominant (e.g. direct) path between the communication node and the transceiver characterized by a complex gain $h_{DC,0}$ and a delay $\tau_{DC,0}$
- A sum of low power reflections caused by objects in the field between the communication node and the transceiver, i.e., second term in the sum (1). This sub-channel is called a DC clutter subchannel.
- A dominant path between the object and the transceiver: $h_{TT,0}, \tau_{TT,0}$.
- A sum of low power reflections caused by the object called TT clutter subchannel i.e., the last term in equation (1).

In each receive beam j, the transceiver (e.g. the 6G transceiver 72) observes a signal which is the convolution between the TX signal s, the channel h and the beam response (also called combiner) $w_j(t) = \sum_{r=1}^{R} w_{j,r} \delta(t)$, corrupted by noise:

$$y_j(t) = (w_j * (s * h))(t) + n(t) \qquad (2)$$

Equation (2) shows that by choosing one receive beam over another, the transceiver can suppress part of the components of the channel h e.g., attenuate components or completely cancel them out, and thus can isolate the channel to the communication node(s) (e.g. the DC UE 76) from the channel to the object.

For JCAS, the transceiver task may be formulated such that computing the best beam $\hat{w}_{opt}$ that allows the transceiver to:

- maximize the signal to noise ratio, while also
- capturing the dominant path to the TT UE $h_{TT,0}, \tau_{TT,0}$.

These requirements may be conflicting, since solving the first independent from the second may coincidentally cancel the channel to the object and vice-versa. Therefore, computing a combiner for solving the first required constrained on the second requirement may yield different results than when solving the two tasks in isolation.

FIG. 9 is a flow chart showing an algorithm, indicated generally by the algorithm 90, in accordance with an example embodiment. The algorithm 90 provides examples of how the grouping of communication nodes and objects may be implemented. The algorithm 90 therefore provides example implementations of the operation 42 of the algorithm 40 described above. The algorithm 90 includes obtaining data such as measurement reports 92, mobility profiles 94 and information relating to the previous groupings 94, combining such data in operation 96 and defining one or more grouping (in operation 98) based on the combined data. Note that the data 92 to 94 are provided by way of example only; one or more of those data examples may be omitted and other data examples may be used.

Consider, for example, an embodiment in which $N_{DC}$ communication nodes (e.g. DC UEs) and $N_{TT}$ articles (e.g. TT UEs) are available in an environment to be served by a transceiver. An association matrix $A \in \{0,1\}^{NDC \times NTT}$ can be defined, where $A_{i,j} = 1$ denotes that the i-th DC UE and the j-th TT UE are associated (grouped).

There are several possibilities for associating the communication nodes and articles.

A first approach is to group an article (e.g. a TT UE) and a communication node (e.g. a DC UE), if they have reported the same transceiver beam (e.g. 6G TRX beam). In case there are more than one communication node (e.g. DC UE) that can be grouped with an article (e.g. TT UE), we may associate one or more communication nodes to the article. By associating multiple communication nodes to an article, the article can benefit from all the allocated bandwidth and/or time and/or power to the communications nodes.

An article (e.g. TT UE) can be grouped with a communication node (e.g. DC UE), if they have reported the same transceiver beam (e.g. 6G TRX) beam or close beams from the codebook. The definition of "close beams" may depend on the defined codebook, but as an example, neighbouring beams could be considered as close beams.

Grouping may be based on an evaluation of whether a communication node (e.g. DC UE) and an article (e.g. TT UE) have the same mobility profile e.g. both are pedestrian UEs, or V2X UEs etc. This evaluation may be implemented, for example, based on UE's reporting their profiles, or based on an evaluation of the maximum Doppler shift done at the 6G transceiver.

Grouping may be based on an evaluation of whether a communication node (e.g. DC UE) and an article (e.g. TT UE) are part of a platoon and/or have been grouped by a location server in advance (e.g. have been part of a group positioning session).

In an example implementation of the operation 66 of the algorithm 60, beam definition may include beam shaping. Beam shaping may be such that transmission beams have sufficient width to communicate with all nodes of a respective group.

The beam shape or width of a transceiver beam (e.g. a 6G TRX beam) may be selected in order to serve a number of communication nodes and/or objects. If at least one of the articles (e.g. TT UEs) grouped with a communication node (e.g. DC UE) reports a transceiver beam different than the reported beam by the DC UE, then the beam properties of the relevant codebook (e.g. 6G TRX codebook) may be adapted accordingly.

As discussed in detail below, a defined resource for a respective node may comprise shaped transmission beams having multiple lobes (such as being based on a multi-beam codebook). At least some of those nodes may correspond to a particular communication node and/or a particular article. Alternatively, transmission beams may be generated using an inverse hierarchical algorithm.

An inverse hierarchical approach could be used in which a second beam codebook with wider beams is considered, where a beam in the second codebook can cover multiple beams from the first codebook. For example, two beams may be aggregated into a composite beam, where the composite beam has similar spatial coverage to the combination of the initial two beams.

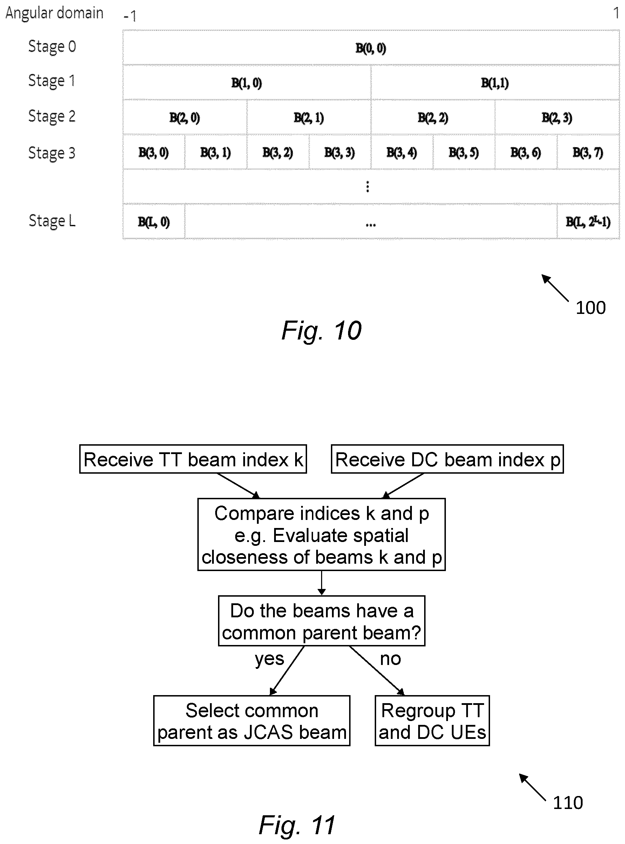

FIG. 10 shows a table, indicated generally by the reference numeral 100, showing features of an example embodiment in which multiple independent beams may be converted to a single beam (i.e. single JCAS/ICAS beam). In the table 100, upon reception of the beam measurements from a communication node (e.g. a DC UE) and an article (e.g. a TT UE), the transceiver (e.g. 6G TRX) may start grouping the articles with at least one communication node and evaluate if their reported beams are close in spatial domain. For example, if a hierarchical codebook is used, spatial closeness of two beams can be evaluated using the mapping to angle domain.

FIG. 11 is a flow chart showing an algorithm, indicated generally by the reference numeral 110, in accordance with an example embodiment. The search for a common parent in the table 100 is exemplified in FIG. 11 where the method looks at the parent beam (if a hierarchical codebook as discussed above is used) and if the parents of the two child beams k and p coincide, the parent becomes the JCAS beam. If the parents do not coincide, the parents themselves become children, and the procedure is repeated.

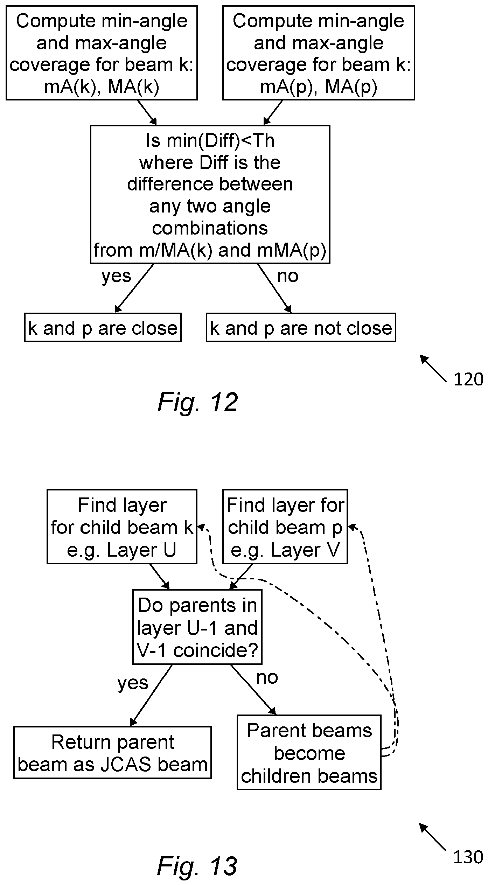

FIG. 12 is a flow chart showing an algorithm, indicated generally by the reference numeral 120, in accordance with an example embodiment. The algorithm 120 shows an example algorithm for the evaluation of "spatial closeness" of example beams k and p (which forms part of the algorithm 110).

FIG. 13 is a flow chart showing an algorithm, indicated generally by the reference numeral 130, in accordance with an example embodiment. The algorithm 130 shows a method by which a parent beam is selected as a JCAS composite beam.

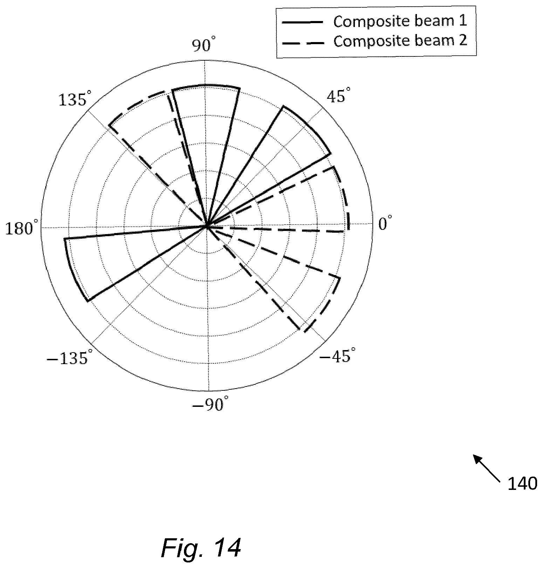

FIG. 14 is a plot showing composite beams, indicated generally by the reference numeral 140, in accordance with an example embodiment.

The relevant transceiver may consider a second beam codebook, where a codeword in the second codebook includes multi-beam properties (pointing towards several directions with multiple narrow beams). The plot 140 shows an example of codebook design, where each codeword is composite of several directional beams. Thus, a 6G transceiver may use a second codebook with composite codewords to cover a communication node and one/multiple articles (e.g. TT UEs), where the reported beams by the UEs are different.

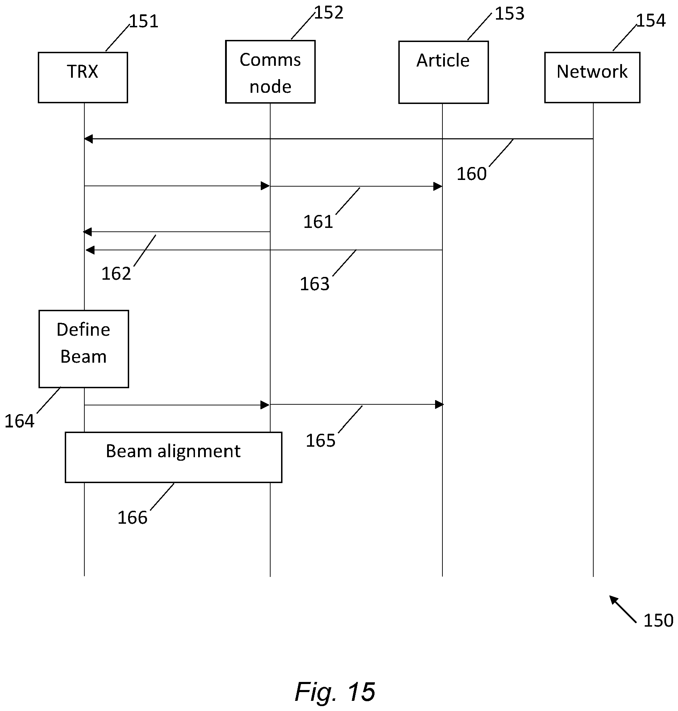

FIG. 15 shows a message sequence, indicated generally by the reference numeral 150, in accordance with an example embodiment. The message sequence 150 shows messages exchanged between a transceiver 151 (e.g. a 6G transceiver), a communication node 152 (e.g. DC UE), an article 153 (e.g. TT UE) and a network node 154.

The message sequence 150 start with the network node 154 sending a message 160 to the transceiver configuring the transceiver to operate a downlink JCAS algorithm in accordance with the principles described herein.

The transceiver 151 sends beam sweeping messages 161 (as described above) that are detected at the communication node 152 and the article 153. In response to the beam sweeping messages 161, the communication node 152 sends "best beam" information 162 to the transceiver and the article 153 sends corresponding "best beam" information 163 to the transceiver.

In the message sequence 150, the transceiver 151 defines beams for use based, at least in part, on the best beam information 162 and 163 and sends beam instructions messages 165 to the communications node 152 and the article 153. Besides the feedback signals 162 and 163, the allocated resources to the article 153 may depend on the associated communication node 152 to the article 153. Therefore, the allocated resources may need to be communicated to the article 153. Also, the transceiver 151 may share the status of a beam shape adaptation procedure for each group of UEs, which may be used by the communication node 152 and articles in the group for UE beam sweeping/matching. Beam alignment 166 may then occur.

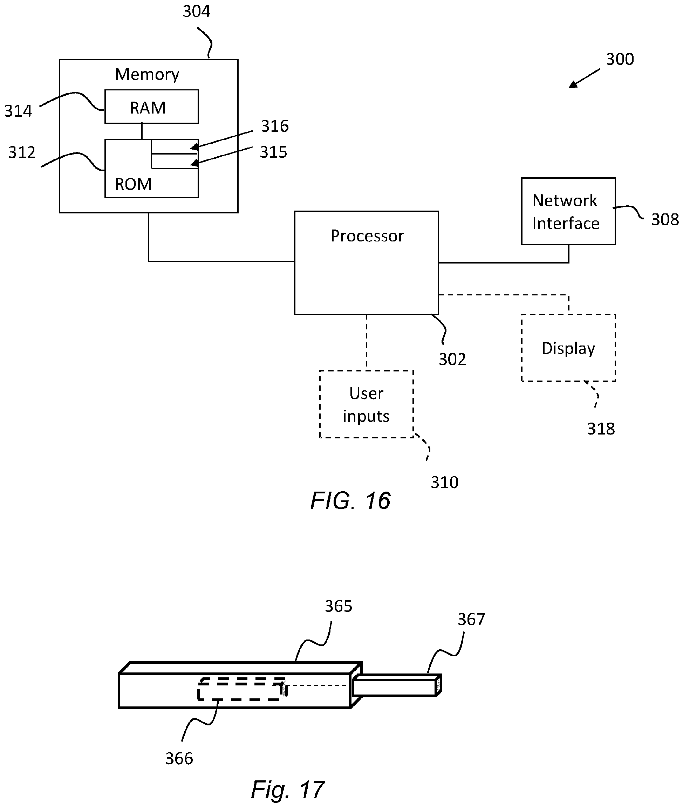

For completeness, FIG. 16 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms and sequences 40, 60, 90, 110, 120, 130 and 150 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 17 shows a tangible media, in the form of a removable memory unit 365, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences of Figures 4, 6, 9, 11-13 and 15 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. An apparatus comprising:

   means for broadcasting a reference signal using a plurality of different resources as part of a beam sweeping algorithm;
   means for receiving, from one or more communication nodes of a mobile communication system, information regarding preferred resources for communication with the respective communication nodes based on a first objective;
   means for receiving, from one or more objects of the mobile communication system, information regarding preferred resources for sensing of the respective objects based on said second objective different to the first objective; and
   means for forming one or more communication nodes of a mobile communication system and one or more objects of the mobile communication system into one or more groups, wherein each group comprises one or more of said nodes and one or more of said objects.

2. An apparatus as claimed in claim 1, further comprising:
   means for defining a resource for each group, wherein each defined resource is used for communications with the one or more nodes of the respective group and for sensing said one or more objects of the respective group.

3. An apparatus as claimed in claim 2, further comprising means for communicating with the node(s) and sensing said object(s) of a group using the respective resources.

4. An apparatus as claimed in claim 2 or claim 3, wherein said means for defining said resource is configured to maximise one of the first and second objectives of the respective group whilst meeting a requirement based on the other of the first and second objectives of the respective group.

5. An apparatus as claimed in any one of claims 2 to 4, wherein:

   the defined resource for a respective group comprises a transmission beam having sufficient width to communicate with all nodes of the respective group; and/or
   the defined resource for a respective node comprises shaped transmission beams having multiple lobes.

6. An apparatus as claimed in claim 5, further comprising:
   means for generating said transmission beams based on a multi-beam codebook, wherein transmission beams are optionally generated using an inverse hierarchical algorithm.

7. An apparatus as claimed in any one of the preceding claims, wherein:

   said groupings are based, at least in part, on defined preferred or optimal resources for communication with the respective communication nodes based on the first objective and defined preferred or optimal resources for sensing of each of one or more objects based on the second objective different to the first objective; and/or
   said one or more groups are formed based on at least one of: shared resources; neighbouring resources; shared mobility profiles; pre-defined groupings; pre-defined codebooks; and supported codebooks.

8. An apparatus as claimed in any one of the preceding claims, wherein:

   the first objective comprises one or more of: received signal strength and signal-to-interference-plus-noise ratio at the respective node; and/or
   the second objective comprises one or more of: line-of-sight probability, position estimation error, speed estimation error and dominant path detection probability.

9. A method comprising:

   broadcasting a reference signal using a plurality of different resources as part of a beam sweeping algorithm;
   receiving, from one or more communication nodes of a mobile communication system, information regarding preferred resources for communication with the respective communication nodes based on a first objective;
   receiving, from of one or more objects of the mobile communication system, information regarding preferred resources for sensing of the respective objects based on said second objective different to the first objective; and forming one or more communication nodes of a mobile communication system and one or more objects of the mobile communication system into one or more groups, wherein each group comprises one or more of said nodes and one or more of said objects.

10. An apparatus comprising:

means for forming one or more communication nodes of a mobile communication system and one or more objects of the mobile communication system into one or more groups, each group comprising one or more of said nodes and one or more of said objects, wherein said groupings are based, at least in part, on defined preferred or optimal resources for communication with the respective communication nodes based on a first objective and defined preferred or optimal resources for sensing of each of one or more objects based on a second objective different to the first objective; and

means for defining a resource for each group, wherein each defined resource is used for communications with the one or more nodes of the respective group and for sensing said one or more objects of the respective group.

11. An apparatus as claimed in claim 10, wherein said means for defining said resource is configured to maximise one of the first and second objectives of the respective group whilst meeting a requirement based on the other of the first and second objectives of the respective group.

12. An apparatus as claimed in claim 10 or claim 11, wherein:

the first objective comprises one or more of: received signal strength and signal-to-interference-plus-noise ratio at the respective node; and/or

the second objective comprises one or more of: line-of-sight probability, position estimation error, speed estimation error and dominant path detection probability.

13. An apparatus as claimed in any one of claims 10 to 12, further comprising:
means for broadcasting a reference signal using a plurality of different resources of a codebook as part of a beam sweeping algorithm.

14. An apparatus as claimed in any one claims 10 to 13, further comprising:

means for receiving details of said preferred or optimal resources based on said first objective from some or all of said one or more communication nodes; and/or

means for receiving details of said preferred or optimal resources based on said second objective from some or all of said one or more objects.

15. A computer program comprising instructions which, when executed by an apparatus, cause the apparatus to:

broadcast a reference signal using a plurality of different resources as part of a beam sweeping algorithm;
receive, from one or more communication nodes of a mobile communication system, information regarding preferred resources for communication with the respective communication nodes based on a first objective;
receive, from one or more objects of the mobile communication system, information regarding preferred resources for sensing of the respective objects based on said second objective different to the first objective; and form one or more communication nodes of a mobile communication system and one or more objects of the mobile communication system into one or more groups, wherein each group comprises one or more of said nodes and one or more of said objects.

*Fig. 1*

*Fig. 2*

*Fig. 3*

*Fig. 4*

54f

54a

54e

Network
node

52

54b

54c                    54d

50

*Fig. 5*

*Fig. 6*

*Fig. 7*

DC UE

76

82

Single beam

6G TRX

TT UE

74

72

80

*Fig. 8*

Measurement reports

Mobility profiles

93

Previous groupings

94

92

Combine

96

Define grouping(s)

90

98

*Fig. 9*

*Fig. 10*

*Fig. 11*

Compute min-angle
and max-angle
coverage for beam k:
mA(k), MA(k)

Compute min-angle
and max-angle
coverage for beam k:
mA(p), MA(p)

Is min(Diff)<Th
where Diff is the
difference between
any two angle
combinations
from m/MA(k) and mMA(p)

yes — no

k and p are close

k and p are not close

120

*Fig. 12*

Find layer
for child beam k
e.g. Layer U

Find layer for
child beam p
e.g. Layer V

Do parents in
layer U-1 and
V-1 coincide?

yes — no

Return parent
beam as JCAS beam

Parent beams
become
children beams

130

*Fig. 13*

Fig. 14

*Fig. 15*

FIG. 16

Fig. 17

Europäisches
Patentamt

European
Patent Office

Office européen
des brevets

# EUROPEAN SEARCH REPORT

Application Number

EP 24 20 8972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN SHIQI ET AL: "Simultaneous Beam Sweeping for Multi-Beam Integrated Sensing and Communication", ICC 2022 - IEEE INTERNATIONAL CONFERENCE ON COMMUNICATIONS, IEEE, 16 May 2022 (2022-05-16), pages 4438-4443, XP034168734, DOI: 10.1109/ICC45855.2022.9838563 [retrieved on 2022-08-11] * the whole document * | 1-15 | INV. H04B7/06 G01S13/00 |

-----

TECHNICAL FIELDS
SEARCHED (IPC)

H04B
G01S

The present search report has been drawn up for all claims

| Place of search | Date of completion of the search | Examiner |
|---|---|---|
| Munich | 25 March 2025 | Sieben, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)